# EUROPEAN PATENT APPLICATION

(11) **EP 2 292 971 A1**
(43) Date of publication of application: **09.03.2011**
(21) Application number: 10163234.7
(22) Date of filing: 19.05.2010
(51) Int. Cl.: F21S 8/08, F21V 21/116, F21W 131/103, F21Y 101/02, F21V 29/00

(54) **Street lighting device**

(30) Priority: 07.09.2009 TW 098130014
(71) Applicant: Thermoshuttle Co., Ltd, Taoyuan City 330 (CN)
(72) Inventor: Shiau, Fuh-Yuarn, 300, Hsinchu City (TW); Wu, Chin-Chun, 654, Sihu Township (TW)
(74) Representative: Ihle, Kornelia

(57) **Abstract**

An outdoor lighting device (100) having an upper cover (102), a lower cover (103) and lighting tubes (10) installed in the lower cover is disclosed. The upper cover has three wave-like raised section formed with a multiple slits (1021-1024) for ventilation. Each lighting tube has two end spindles (25) formed with teeth (20) and the lower cover has a fence built and surrounded inside to form a drainage trench (128) and the fence has a plurality of semi-cylindrical seats (23) with racks on two opposite sides matching with said teeth so that the projecting angle of the lighting tube can be adjusted against the racks. The lighting tubes attached with heat dissipation fins on their back side, and the plane normal of heat dissipation fins in parallel with the two end of the lighting tube.

## Description

### BACKGROUND OF THE INVENTION

### Field of the Invention

The present invention relates to a lighting device, particularly one designed to be used as street lamps or outdoor LED (Light Emitting Diodes) lighting devices.

### Description of the Prior Art

Conventional street lamps are mostly either halogen or mercury lamps attached on the bent end of a lamp post. The lamp apparatus usually contains one or more than one halogen lamp or light emitting component, along with a reflector shield to reflect light emitted therefrom in order to achieve the desired illumination.

The conventional lamps, in general, consume more energy and expect shorter service life than LED lamps do.

The light beams of LEDs are known to have more condensed than do conventional light sources. But until recently, the luminosity of LEDs has been pretty limited, thus confining their use to such devices as signal lights, tail lights of vehicles, decorative lights, etc., which requires relatively low brightness. fortunately, with the invention of blue light LED, and prices of LED steep depreciation, both of them prompt the development of the high brightness white light LED and their related applications. Particularly in the nowadays, when reducing energy consumption and carbon emission has become a major world issues. Governments around the world are encouraging people to replace their incandescent lighting with LED lighting, which is expected to become the mainstream of the market in the foreseeable future. Also called cold-cathode, LEDs are so different from conventional incandescent lights. They consume less energy and, longer service life e.g. several tens of thousands of hours if they get adequate heat dissipation during lighting. By contrast, incandescent light bulbs usually last only about one thousand hour, while compact fluorescent bulbs, although lasting a bit longer, can only last up to a few thousand hours.

Unfortunately, the power of a single LED, even a so called high-power or high-brightness one, is usually a few watts only; the lighting generated is thus far from being adequate for most illumination needs. As a result, LED lighting devices often have tens of LEDs crowed in an rectangular array or a circular array mounted on predetermined curved board at in several light tube (light bars) side by side and with each light tube usually consisting of ten or more LED chips in several rows

One can easily imagine that, with tens of LED chips crowded in a closed space, the LEDS will soon suffer from overheating and even premature degradation. To avoid that, larger plane area or space to position the LED chips than that of conventional lighting devices is usually required. Besides, most LED lighting devices are designed for indoor use only. They do not take such natural ambient factors as rain, storms, snows, sands, gusts, etc., into consideration. By contrast, outdoor lighting devices such as street lamps, road lights, traffic signal lights, etc., all have to be able to withstand gust, heavy-rain, sandstorms, blizzards, and earthquakes...etc.

Furthermore, outdoor lighting devices are not for lighting only, it can be an ornament thus has to take visual aesthetics of the whole street into consideration.

As is depicted above, an objective of the present invention is to provide a LED street lighting device that can: withstand windstorm, heavy-rain, sandstorm, blizzards, snowstorms and earthquakes etc., and allows easy adjustment of its light projecting angle in accordance with the requirements of its environment, and easy to maintain. Hence, to achieve the above aims, the street lighting device must be robust enough to resist the aforementioned elements, with adequate heat dissipation capability to prevent the LEDs' from light degradation, and with such modulized structure design as to provide for easy maintenance. Also, the lighting capacity of the LED street light must be able to conform to the road safety standards set by governments.

### Summary of the Invention

The present invention disclosed an outdoor lighting device having an upper cover, a lower cover and lighting tubes installed in the lower cover is disclosed. The upper cover has three wave-like raised section formed with a multiple slits for ventilation. Each lighting tube has two end spindles formed with teeth and the lower cover has a fence built and surrounded inside to form a drainage trench having two drain holes formed therein and the fence has a plurality of semi-cylindrical seats with racks on two opposite sides matching with the teeth so that the projecting angle of the lighting tube can be adjusted against the seat. The lighting tubes attached with heat dissipation fins on their back side, and the plane normal of heat dissipation fins in parallel with the two end of the lighting tube.

Atop two lighting tubes at the central portion, there is a bridge for supporting a power supply so that the power supply does not occupy the plane area of the lighting device.

The lower cover further comprises a sleeve outside of the lower cover housing with two curved jaws. The outdoor lighting device can be fixed on one end of lamp post by the curved jaws.

### Brief Description of the Drawings

The foregoing aspects and many of the attendant advantages of this invention will become more readily appreciated as the same becomes better understood by reference to the following detailed description, when taken in conjunction with the accompanying drawings, wherein:

Fig. 1A is the explosive view of lighting device of the present invention;

Fig. 1B shows the detailed feature of the light tube support according to the present invention;

Fig. 2 is the three dimensional view of the light tube module according to the present invention;

Fig. 3 shows the structure of the light tube module according to the present invention;

Fig. 4 is the cross-sectional structural viewing from the sleeve according to the present invention.

### Detailed Description of the Invention

The present invention provides an innovative outdoor lighting device able to withstand windstorms, blizzards, rainstorms, sandstorms, earthquakes etc., and easily to adjust its light distribution so as to meet the needs of the surroundings.

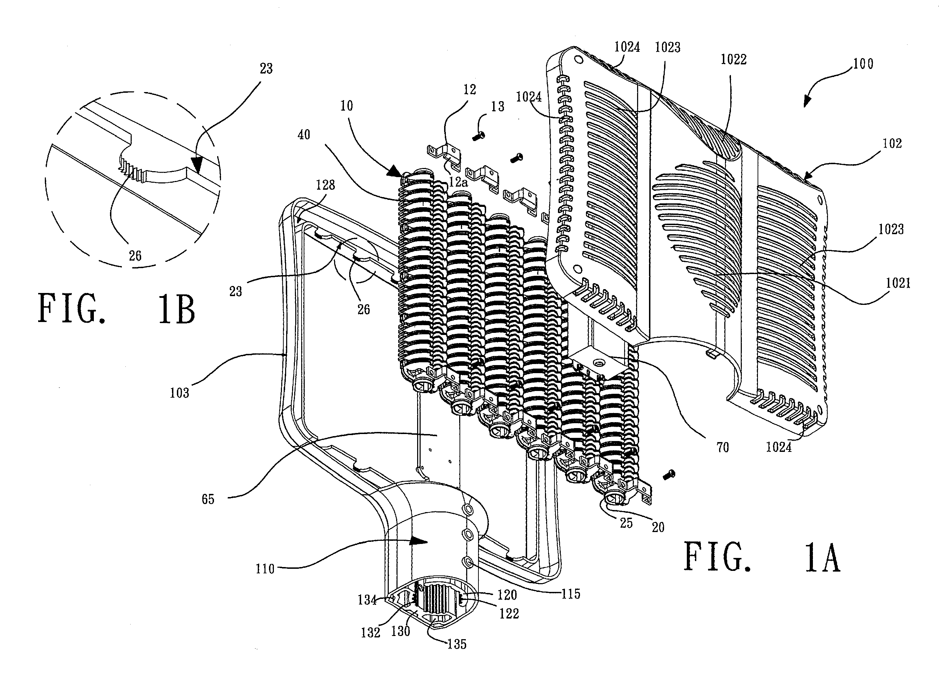

FIG.1 shows an exploded diagram of the LED light device 100 in accordance with the present invention. In FIG.1, the LED light device 100 comprises an upper cover 102, a plurality of lighting tubes 10, and a lower cover 103. The function of the upper cover 102 is to prevent dust, rain, snow, etc., from directly contacting the lighting tubes 10. As the upper cover will somewhat reduce the heat dissipation capability. The upper cover 102 is made with three raised-up wave-like sections on which multiple slits patterns are formed therein and on all sides, as is shown on 1021, 1022, 1023, 1024 of Fig. 1A, to facilitate the heat dissipation of the LEDs. The surface of the section in the middle is particularly raised up to form a hollow to house a power supply 70. These multiple slits patterns allow the night wind to get into the housing and take away the heat of the heat dissipation fins of the light tubes, effectively cooling down the tubes. Both the multiple slits patterns on the surfaces of the upper cover and the raised contours of the three surface sections serve to enhance air convection capability, with the raised contours being instrumental in improving the rigidity of the cover, preventing the much hollowed out area from weakening its surface structure. Conventional lighting devices usually have to put their power supply sources in front or behind, thus limiting the length of their lighting tubes. This is not the case with the present invention, which can put its power supply on a bridge over the light tubs but inside the lower cover, as is shown in Fig. 1A.

Another advantage of the extra-raised middle section of the upper cover is that winds from any direction can go into the housing without any obstruction, which is tantamount to creating a windward slope.

Of course, with outdoor LED lighting devices, the more ventilation the better the heat dissipation. But the openings created by these multiple slits patterns also allow rain and dust to come through, affecting the quality and service life of the light tubes. Thus such LED devices must have the capability to protect its LED components against water, prevent dust from gathering, which will affect heat dissipation capability of the LED lighting device, and even resist corrosion.

To address the above problem, the present invention adopts a unique structure. Please refer to Fig. 1, there are a plurality of light tubes that are long in shape with heat dissipation fins like bat-wings. Please also note that the orientation of the slits on the upper cover's hollow-out surface is parallel to the orientation of the heat dissipation fins 40 (that is, perpendicular to the plane normal of the heat dissipation fins 40).

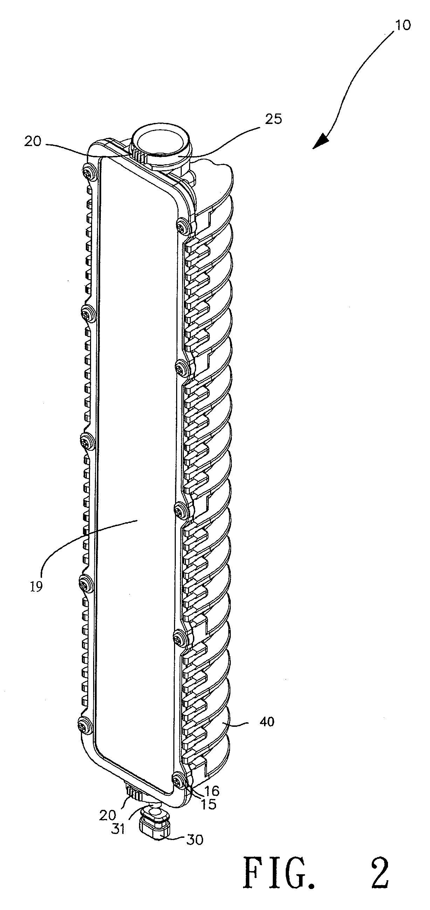

Please also refer to Fig. 2, the three dimensional view of the light tubes. A plurality of heat dissipation fins 40 are set on the hulls of the light tubes perpendicular to the axle line of the tubes (i.e, the axle line is parallel to the surface normal of the heat dissipation fins 40). The advantage of such a design is that the drainage routes for dust or even bird excrement are shorter than that of heat dissipation fins in parallel with axle line of the the light tubes.

On the flat surface of the hull inside light tube, a LED aluminum base module is installed and fastened with a plurality of screws 16. The LED module comprises a piece of PC board, a plurality of LED chips and with lens atop them.

Meanwhile, on both ends of the light tubes 10 there are adjustment spindles 25, by means of a plurality of teeth 20 facing the ground, as show in Fig. 2.

Please turn back to Fig. 1. At the front end of the lower cover 103 there is a sleeve 110 formed thereon for LED device fixed on the post. An inner wall of fence inside the periphery of the lower cover 103 has support/seats 23 for light tubes. The supports/seats 23 are shaped like upward curves and featured with racks on the bottom to match with the teeth of the adjustment spindle 23 so that the light tubes 10 can be adjusted as needed. Once the adjustment of the position angle of the light tubes 10 is done, the adjustment spindle 25 will be fixed with fastener sets 12 and fastened with screws 13. The locker 12a of the fastening set 12 will lock the spindle 25 tightly in place.

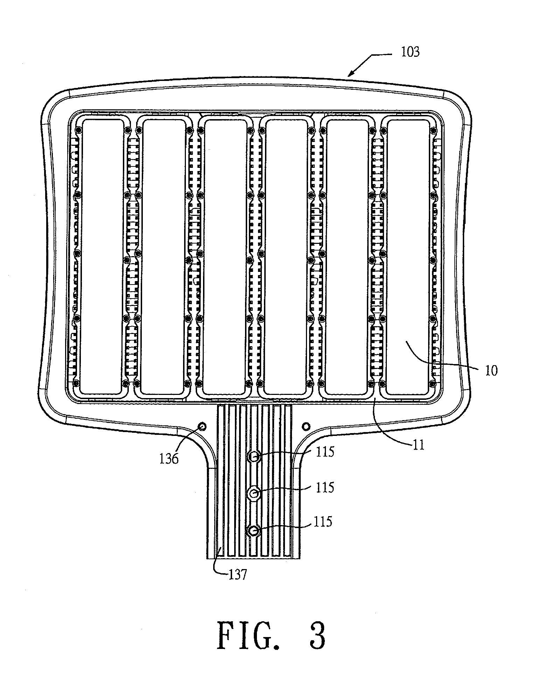

On the outer periphery of the lower cover 103, a ring of drainage trench 128 is structured to direct residual rainwater to drain out through sleeve 110. Fig. 3 shows the bottom view of the present invention, after the light tubes 10 are installed on the lower cover, wherein near the rear end of the aforesaid sleeve 110 there are two water draining openings 136, through which residual rainwater collected by the drainage trench128 can be drained out. There are also gaps (corresponding to the aforementioned multiple slits patterns (1021-1024) between each and every of the light tubes 10 to make room for rain, dust, and air convection.

The pattern on the pan-handle part of the device, on the other hand, makes room for the light tubes 10, preventing surfaces of the lights from directly contacts working table during the assembling process.

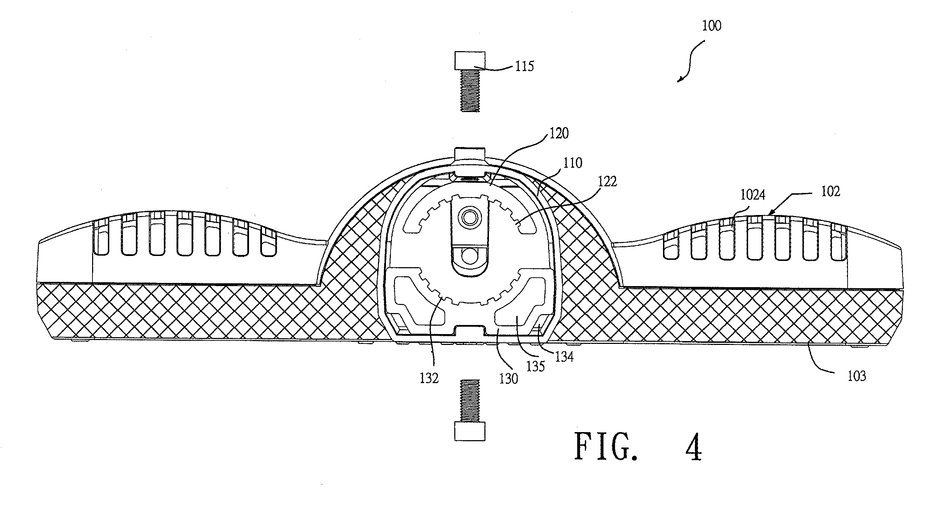

As shown in Fig. 1A and Fig. 4, the sleeve 110 is fastened on the bent end of the lamp post via the two vise jaws inside it: the upper jaw 120 and the lower jaw 130. There is one drainage opening 134 in the area the lower jaw 130 touches the sleeve 110, whereas inside the lower jaw 130 there is another drainage opening 135. Residual rainwater collected by the drainage grooves 128 can be drained out through the openings 136, 134, and 135. Besides, there are also uneven grooves on both the upper jaw and lower jaw to direct water to flow from high to low (in relation to the ground after the present invention is mounted on a lamp post) and to eventually drain out.

A bridge 65 is structured above the heat dissipation fins 40 of the two light tubes 10, whereas power supply 70 is positioned upon the bridge 65. Both the bridge 65 and the power supply 70 are placed in the hollow of the raised middle section of the upper cover. As the power supply is situated in a central position, wiring can be shortened.

The present invention has the following features and advantages:
1. The bottom of the lower case is a flat surface, not a curved one.
   However, each of the light tubes of the device can be adjusted for light shedding angle to ensue no grey area between too lamp post.
2. After each LED tube is fine-tune adjusted, it is locked tight in position, unless unfastened to re-adjust the light shedding angle, enabling it to withstand even the fiercest strong winds.
3. The light tubes are long in shape and have a plurality of fins like bat-wings. The plane normal of the heat dissipation fins is in parallel rather than perpendicular to the axle line of the tubes so that the drainage routes are shorter.
4. Outside the lower cover a sleeve which is an integrated part of it, and it housing two curved jaws to fasten the light device on an end of the lamp post. The upper cover comes with three raised surfaces with hollowed out patterns. Thus the whole unit not only allows the night wind to get into the housing and take away its heat, but can also withstand strong winds.
5. The extra-raised middle section of the upper cover not only provide sufficient housing space for the power supply, allowing more room for laying out light tubes than do conventional lighting devices. Also, this raised section with multiple slits patterns invites winds from all directions, which is helpful to the heat dissipation of the light tubes, tantamount to creating a windward slope..

As is understood by a person skilled in the art, the foregoing preferred embodiment of the present invention is an illustration, rather than a limiting description, of the present invention. It is intended to cover various modifications and similar arrangements included within the spirit and scope of the appended claims, the scope of which should be accorded the broadest interpretation so as to encompass all such modifications and similar structures.

## Claims

1. An outdoor lighting device (100) that comprises:
an upper cover (102) with three raised up surfaces all with multiple slits patterns (1021,1022,1023,1024) formed therein and with a central section being the most raised up as to allow a space within for placing a power supply(70);
a lower cover (103) having a fence built and surrounded inside and said fence has a plurality of semi-cylindrical seats (23) with racks (26) on two opposite sides;
a plurality of lighting tubes (10) having two end having adjustment spindles (25) with teeth (20) installed on said seats (23), and each of said lighting tubes (10) attached with heat dissipation fins (40), wherein said heat dissipation fins (40) are produced as an integrate part of the tubes and planes of said heat dissipation fins (40) perpendicular to a axis line along said two ends;
a bridge (65) atop two of said light tubes (10) corresponding to said central section for setting said power supply(70).

2. The outdoor lighting device as in Claim 1 wherein said lower cover (103) further comprises a sleeve (110) formed outside for said lighting device (100) fasten on one end of lamp post.

3. The outdoor lighting device as in Claim 2, wherein said sleeve comprises an upper jaw(120) and a lower jaw (130)and each of said jaws (120,130) has grooves(122,132) to facilitate water drainage.

4. The outdoor lighting device as in Claim 1, wherein said multiple slits patterns on three raised up surfaces are along a direction perpendicular to a plane normal of said heat dissipation fins and remaining corresponding to two ends of said lighting tube (10) are in parallel.

5. The outdoor lighting device as in Claim 1, furthering comprises a plurality of fastening sets(12) for said light tubs (10) to fasten after a projecting angle of each of lighting tube(10) is adjusted.

6. The outdoor lighting device as in Claim 1, wherein said fence constructed a drainage trench (128) and two drain holes (136) formed therein to direct rainwater to drain out through two drain holes
